# EUROPEAN PATENT APPLICATION

(11) **EP 4 600 796 A1**
(43) Date of publication of application: **13.08.2025**
(21) Application number: 23874508.7
(22) Date of filing: 31.07.2023
(51) Int. Cl.: G06F 3/0483

(54) **INFORMATION PROCESSING DEVICE, METHOD, PROGRAM, AND SYSTEM**

(30) Priority: 06.10.2022 JP 2022161837
(71) Applicant: Orange Inc., Tokyo 107-0052 (JP)
(72) Inventor: UGAKI, Shoko, Tokyo 107-0052 (JP)
(74) Representative: AWA Sweden AB
(86) International application number: PCT/JP2023/027924
(87) International publication number: WO 2024/075375

(57) **Abstract**

A program according to an aspect of the present disclosure causes a computer to function as: means for, when receiving a first pattern operation while a first cover image corresponding to a first e-book is displayed on a screen, displaying a part included in the first e-book on the screen; means for, when receiving the first pattern operation while the part included in the first e-book is displayed on the screen, displaying another part included in the first e-book on the screen; and means for, when receiving a second pattern operation different from the first pattern operation, displaying a second cover image corresponding to a second e-book on the screen, the second e-book being different from the first e-book.

## Description

### [TECHNICAL FIELD]

The present disclosure relates to an information processing device, a method, a program, and a system.

### [BACKGROUND ART]

E-books such as electronic comics can be browsed with various terminals. However, with conventional user interfaces (UIs) used for browsing e-books, there are situations where a user feels that it is troublesome to reach content that the user intends to browse, such as a situation where the user has to perform a plurality of operations in accordance with a hierarchical structure of data of an e-book.

Patent Literature 1 describes a technique designed to switch a browsing operation mode to one of a plurality of browsing operation modes by performing only one operation that need not be performed accurately while a single page or facing pages of an e-book are displayed. For example, Patent Literature 1 shows an example in which, when an operation for moving a page is received while the last page of a sub-content is displayed, the first page of another sub-content adjacent to the sub-content is displayed.

### [CITATION LIST]

### [PATENT LITERATURE]

### [PATENT LITERATURE 1]

Japanese Patent Laid-Open No. 2015-087806

### [SUMMARY OF INVENTION]

### [TECHNICAL PROBLEM]

The technique according to Patent Literature 1 may improve usability in a situation where a user consecutively reads on a series of e-books. However, the technique according to Patent Literature 1 is not expected to improve usability in a situation where, for example, a user is undecided about which e-book to read in earnest.

An object of the present disclosure is to provide a user with a comfortable information browsing experience.

### [SOLUTION TO PROBLEM]

A program according to an aspect of the present disclosure causes a computer to function as: means for, when receiving a first pattern operation while a first cover image corresponding to a first e-book is displayed on a screen, displaying a part included in the first e-book on the screen; means for, when receiving the first pattern operation while the part included in the first e-book is displayed on the screen, displaying another part included in the first e-book on the screen; and means for, when receiving a second pattern operation different from the first pattern operation, displaying a second cover image corresponding to a second e-book on the screen, the second e-book being different from the first e-book.

### [BRIEF DESCRIPTION OF DRAWINGS]

**[****Figure 1]** Figure 1 is a block diagram illustrating a configuration of an information processing system according to the present embodiment.
**[****Figure 2]** Figure 2 is a block diagram illustrating a configuration of a client device according to the present embodiment.
**[****Figure 3]** Figure 3 is a block diagram illustrating a configuration of a server in the present embodiment.
**[****Figure 4]** Figure 4 is an explanatory diagram of an aspect of the present embodiment.
**[****Figure 5]** Figure 5 is the flowchart of display control processing in the present embodiment.
**[****Figure 6]** Figure 6 is the flowchart of the display control processing in the present embodiment.
**[****Figure 7]** Figure 7 is a flowchart of load control processing in the present embodiment.
**[****Figure 8]** Figure 8 is the flowchart of the load control processing in the present embodiment.
**[****Figure 9]** Figure 9 is an explanatory diagram of first load processing executed in the load control processing in the present embodiment.
**[****Figure 10]** Figure 10 is an explanatory diagram of second load processing executed in the load control processing in the present embodiment.
**[****Figure 11]** Figure 11 is an explanatory diagram of third load processing executed in the load control processing in the present embodiment.

### [DESCRIPTION OF EMBODIMENT]

Hereinafter, an embodiment of the present invention will be described in detail with reference to the accompanying drawings. In the drawings for illustrating the embodiment, the same constituent components will be denoted by the same reference characters in principle, and repetitive descriptions thereof will be omitted.

### (1) Configuration of Information Processing System

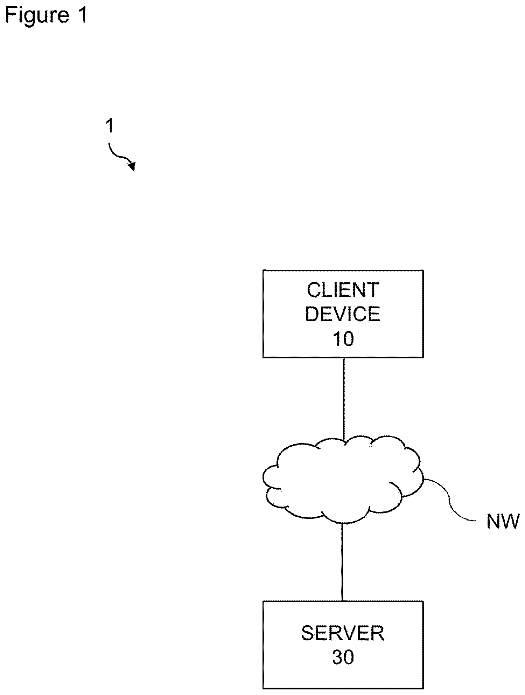

A configuration of an information processing system will be described. Figure 1 is a block diagram illustrating a configuration of an information processing system according to the present embodiment.

As illustrated in Figure 1, an information processing system 1 includes a client device 10 and a server 30.

The client device 10 and the server 30 are connected together via a network (e.g., the Internet or intranet) NW.

The client device 10 is an example of an information processing device that transmits a request to the server 30. The client device 10 is, for example, a smartphone, a tablet computer, a personal computer, or an e-book device. A user of the client device 10 is, for example, a reader of an e-book. The e-book is a digitized book (e.g., comic, magazine, novel, practical book, specialized book, etc.).

The e-book can include information about, for example, at least one of the following.
- Cover image
- Page images
- Main text

There is an ordering relation determined among a plurality of page images constituting the e-book or a plurality of characters constituting the main text. Such an ordering relation depends on a structure of the e-book. At the same time, there is an ordering relation determined among a plurality of e-books. Note that the ordering relation among the e-books may be changed (sorted) according to instructions from a user of the client device 10, an administrator of the information processing system 1, or the like.

The server 30 is an example of an information processing device that provides, to the client device 10, a response based on a request transmitted from the client device 10. The server 30 is, for example, a server computer.

### (1-1) Configuration of Client Device

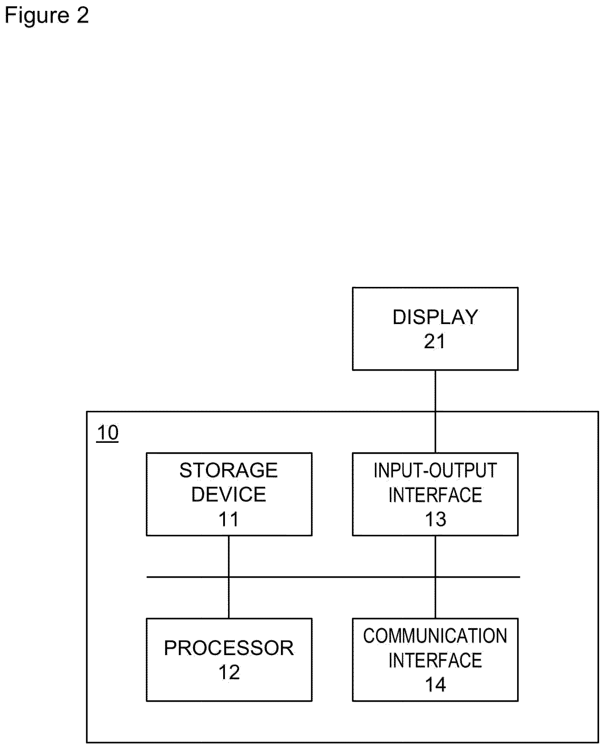

The configuration of the client device will be described. Figure 2 is a block diagram illustrating a configuration of a client device according to the present embodiment.

As illustrated in Figure 2, the client device 10 includes a storage device 11, a processor 12, an input-output interface 13, and a communication interface 14. The client device 10 is connected to a display 21.

The storage device 11 is configured to store programs and data. The storage device 11 is, for example, a combination of a read only memory (ROM), a random access memory (RAM), and a storage (e.g., a flash memory or a hard disk).

The programs include, for example, the following programs.
- Programs of operating system (OS)
- Programs of applications that execute information processing (e.g., a web browser or an application for browsing an e-book)

The data includes, for example, the following types of data.
- Database referred to in information processing
- Data obtained by executing information processing (i.e., results of executing information processing)

The processor 12 is a computer that implements functions of the client device 10 by running the programs stored in the storage device 11. The processor 12 is, for example, at least one of the following.
- Central Processing Unit (CPU)
- Graphic Processing Unit (GPU)
- Application Specific Integrated Circuit (ASIC)
- Field Programmable Array (FPGA)

The input-output interface 13 is configured to obtain information (e.g., instructions from a user) from an input device connected to the client device 10 and to output information (e.g., an image signal) to an output device connected to the client device 10.

The input device is, for example, a keyboard, a pointing device, a touch panel, or a combination thereof.

The output device is, for example, the display 21, a speaker, or a combination thereof.

The communication interface 14 is configured to control communication between the client device 10 and an external device (e.g., the server 30).

The display 21 is configured to display an image (a still image or a video). The display 21 is, for example, a liquid crystal display, an organic electroluminescence display, or electronic paper.

### (1-2) Configuration of Server

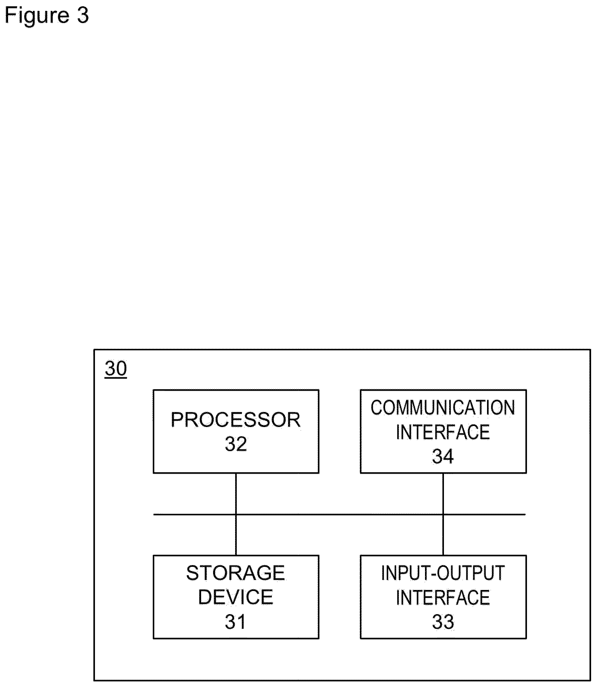

The configuration of the server will be described. Figure 3 is a block diagram illustrating a configuration of a server in the present embodiment.

As illustrated in Figure 3, the server 30 includes a storage device 31, a processor 32, an input-output interface 33, and a communication interface 34.

The storage device 31 is configured to store programs and data. The storage device 31 is, for example, a combination of a ROM, a RAM, and a storage (e.g., a flash memory or a hard disk).

The programs include, for example, the following programs.
- Programs of OS
- Programs of applications that execute information processing

The data includes, for example, the following types of data.
- Database referred to in information processing
- Results of executing information processing

The processor 32 is a computer that implements functions of the server 30 by running the programs stored in the storage device 31. The processor 32 is, for example, at least one of the following.
- CPU
- GPU
- ASIC
- FPGA

The input-output interface 33 is configured to obtain information (e.g., instructions from a user) from an input device connected to the server 30 and to output information (e.g., an image signal) to an output device connected to the server 30.

The input device is, for example, a keyboard, a pointing device, a touch panel, or a combination thereof.

The output device is, for example, a display.

The communication interface 34 is configured to control communication between the server 30 and an external device (e.g., the client device 10).

### (2) Aspect of Embodiment

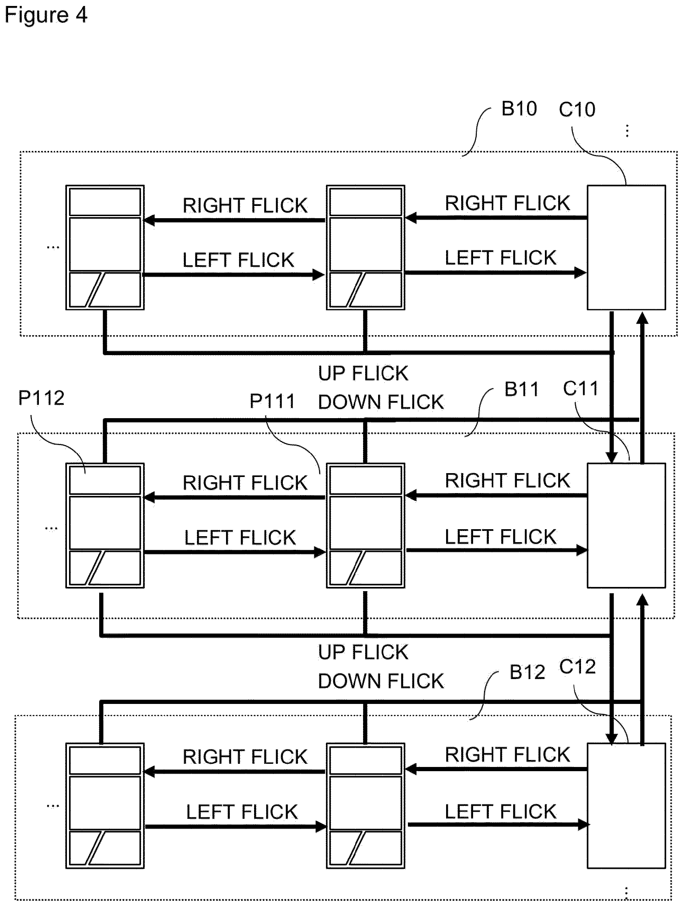

An aspect of the present embodiment will be described. Figure 4 is an explanatory diagram of the aspect of the present embodiment.

The client device 10 in the present embodiment controls a screen displayed on the display 21 in accordance with operations from a user when an e-book is browsed. For example, the client device 10 responds to the operations from the user as illustrated in Figure 4.

In an example illustrated in Figure 4, three e-books B10, B11, and B12 are ordered. The e-book B10 is located immediately before the e-book B11, and the e-book B12 is located immediately after the e-book B11. The e-books each include a plurality of page images that are ordered. For example, the e-book B11 includes a page image C11 corresponding to a cover (hereinafter, will be referred to as a "cover image") and page images P111 and P112 corresponding to a main part. The cover image C11 is the first page image, the page image P111 is the second (i.e., the first in the main part) page image, and the page image P112 is the third page image.

When the client device 10 receives a right flick operation (an example of a "first pattern operation") while a cover image corresponding to some e-book is displayed on the display 21, the client device 10 displays the first page image in a main part of the e-book (an example of "a part included in an e-book") on the display 21. For example, when the client device 10 receives a right flick operation while the cover image C11 is displayed on the display 21, the client device 10 displays the page image P111 on the display 21.

When the client device 10 receives a right flick operation or a left flick operation (an example of the "first pattern operation") while any one page image (an example of "a part included in an e-book") of page images corresponding to some e-book is displayed on the display 21, the client device 10 displays a page image after or before the any one page image (an example of "another part included in an e-book") on the display 21. For example, when the client device 10 receives a right flick operation while the page image P111 is displayed on the display 21, the client device 10 displays the page image P112 on the display 21. In contrast, when the client device 10 receives a left flick operation (i.e., an operation that is of the same type as and in an opposite direction to the right flick operation) while the page image P112 is displayed on the display 21, the client device 10 displays the page image P111 on the display 21.

When the client device 10 receives an up flick operation or a down flick operation (each an example of a "second pattern operation") while a cover image or any one of page images corresponding to some e-book is displayed on the display 21, the client device 10 displays an e-book after or before the e-book on the display 21. For example, when the client device 10 receives an up flick operation while the cover image C11 or any one of the page images P111 to P112 corresponding to the e-book B11 is displayed on the display 21, the client device 10 displays a cover image C12 corresponding to the e-book B12 on the display 21. In contrast, when the client device 10 receives a down flick operation **(i.e.,** an operation that is of the same type as and in an opposite direction to the up flick operation) while the cover image C11 or any one of the page images P111 to P112 corresponding to the e-book B11 is displayed on the display 21, the client device 10 displays a cover image C10 corresponding to the e-book B10 on the display 21.

In this manner, with the client device 10, while browsing one e-book, the user can perform display switching to another e-book in a single operation. That is, with the client device 10, in a situation where the user searches for an e-book to read in earnest, by repeating the second pattern operation, the user can check cover images of different e-books comfortably in a short time like, for example, zapping in watching television. In addition, with the client device 10, a switch from a cover image to a page image and an operation of switching between page images are both performed by the first pattern operation. Therefore, the user can comfortably read on page images subsequent to a cover image that the user is interested in.

### (3) Information Processing

The information processing in the present embodiment will be described.

### (3-1) Display Control Processing

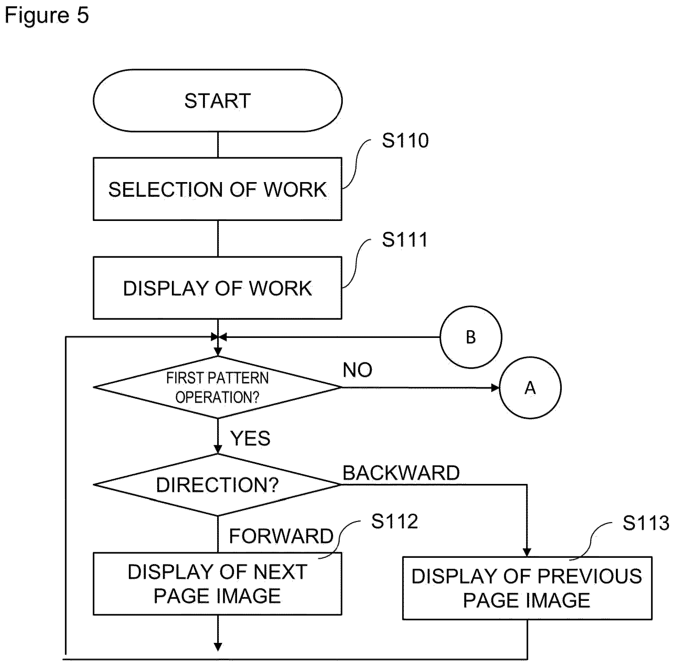

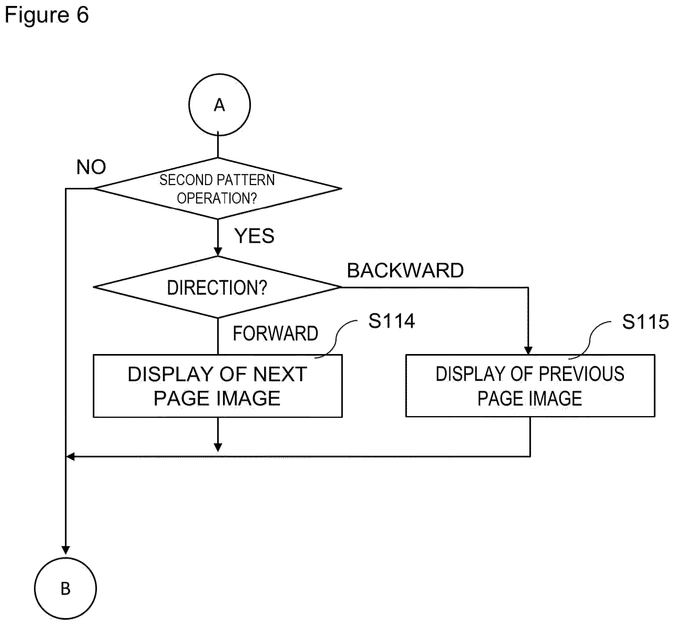

Display control processing in the present embodiment will be described. Figure 5 is a flowchart of the display control processing in the present embodiment. Figure 6 is the flowchart of the display control processing in the present embodiment.

The display control processing in the present embodiment can be started by the client device 10 running a specified application or the client device 10 accessing the server 30 that provides a specified SaaS (Software as a Service).

As illustrated in Figure 5, the client device 10 executes selection of work (S110).

Specifically, the client device 10 selects a work (e-book) to be browsed in accordance with user instructions. As an example, the client device 10 displays, on the display 21, a screen (a library screen) that shows a plurality of selectable works, and a user performs an operation of selecting a desired work on the screen.

After step S110, the client device 10 executes display of work (S111).

Specifically, the client device 10 displays the work selected in step S110 on the display 21.

As a first example of the display of work (S111), the client device 10 displays a cover image corresponding to the work being selected (hereinafter, referred to as a "target work") on the display 21 irrespective of a browsing history of the user.

As a second example of the display of work (S111), the client device 10 refers to a browsing history of the user about the target work and displays, on the display 21, a page image browsed by the user last time or any one of a predetermined number of page images before and after the page image browsed by the user last time.

After step S111 (i.e., while the cover image or the page image of the target work is displayed), the user can perform, on the client device 10, an operation for content that the user intends to browse next. As an example, when intending to browse another part of the target work, the user performs the first pattern operation. To the first pattern operation, an operation of a specified type in a specified direction is assigned. In addition, in the first pattern operation, whether a displayed part is to be switched in a "forward" direction or a "backward" direction can be specified with a direction of the first pattern operation. On the other hand, when intending to browse a work different from the target work, the user performs the second pattern operation. To the second pattern operation, an operation of a specified type in a specified direction is assigned. To the first pattern operation and the second pattern operation, operations that differ in at least one of direction and type are assigned. In addition, in the second pattern operation, whether a displayed work is to be switched in a "forward" direction or a "backward" direction can be specified with a direction of the second pattern operation.

As an example, a flick operation in a right-left direction can be assigned as the first pattern operation, and a flick operation in an up-down direction can be assigned as the second pattern operation. In addition, a right direction can be assigned as the "forward" direction, a left direction can be assigned as the "backward" direction, an upward direction can be assigned as the "forward" direction, and a downward direction can be assigned as the "backward" direction.

After step S111, when the client device 10 receives the first pattern operation, and a direction of the operation is "forward", the client device 10 executes display of next page image (S112).

Specifically, the client device 10 displays a page image following content that is currently displayed on the display 21 (i.e., the cover image or the page image of the target work) on the display 21.

As a first example of the display of next page image (S112), in a case where the display 21 displays the cover image of the target work, the client device 10 displays the second page image (i.e., the first page image in a main part) of the target work on the display 21 irrespective of the browsing history of the user. Alternatively, the client device 10 may refer to the browsing history of the user about the target work and display, on the display 21, the page image browsed by the user last time or any one of the predetermined number of page images before and after the page image browsed by the user last time.

As a second example of the display of next page image (S112), in a case where the display 21 displays a page image (other than the last page image) of the target work, the client device 10 displays a page image following the page image being displayed out of the page images of the target work **(i.e.,** a page image that is located immediately after the page image being displayed in an ordering relation determined among a plurality of page images of the target work) on the display 21.

In a case where the display 21 displays the last page image of the target work, the client device 10 may display the library screen, an account management screen of the user, or first content corresponding to the target work on the display 21. The first content may be, for example, any one of the following.
- Information for introducing the target work
- Sales information on goods relating to the target work
- Invitational information relating to the target work **(e.g.,** a campaign offering presents, etc.)
- Information for fans of the target work (e.g., information for an additional purchase of target work as a gift for another user)
- Cover image of a work following the target work (i.e., a work located immediately after the target work in an ordering relation determined among works) (in a case where the work has not been purchased, the cover image can contain an object for receiving user instructions for the purchase)
- Information for introducing the work following the target work (in a case where the work has not been purchased, the cover image can contain an object for receiving user instructions for the purchase)
- Cover image of a work following the target work in a series to which the target work belongs (e.g., a work corresponding to a next story or a next volume) (in a case where the work has not been purchased, the cover image can contain an object for receiving user instructions for the purchase)
- Information for introducing the work following the target work in a series to which the target work belongs (in a case where the work has not been purchased, the cover image can contain an object for receiving user instructions for the purchase)

After step S111, when the client device 10 receives the first pattern operation, and a direction of the operation is "backward", the client device 10 executes display of previous page image (S113).

Specifically, the client device 10 displays a page image previous to content that is currently displayed on the display 21 (i.e., the cover image or the page image of the target work) on the display 21.

As a first example of the display of previous page image (S113), in a case where the display 21 displays a page image of the target work (other than the first page image (i.e., the cover image)), the client device 10 displays a page image previous to the page image being displayed out of the page images of the target work (i.e., a page image located immediately before the page image being displayed in the ordering relation determined among the plurality of page images of the target work) on the display 21.

As a second example of the display of previous page image (S113), in a case where the display 21 displays the cover image of the target work, the client device 10 may display the library screen, the account management screen of the user, or second content corresponding to the target work on the display 21. The second content may be, for example, any one of the following.
- Information for introducing the target work
- Sales information on goods relating to the target work
- Invitational information relating to the target work (e.g., a campaign offering presents, etc.)
- Information for fans of the target work (e.g., information for an additional purchase of target work as a gift for another user)
- Cover image of a work previous to the target work (i.e., a work located immediately before the target work in the ordering relation determined among works)
- Information for introducing a work previous to the target work
- Last page image of the work previous to the target work
- Cover image of a work previous to the target work in the series to which the target work belongs (e.g., a work corresponding to a previous story or a previous volume)
- Information for introducing a work previous to the target work in the series to which the target work belongs
- Last page image of the work previous to the target work in the series to which the target work belongs

As illustrated in Figure 6, after step S111, when the client device 10 receives the second pattern operation, and a direction of the operation is "forward", the client device 10 executes display of next work (S114).

Specifically, the client device 10 displays a work following the target work on the display 21. For example, assume that an order of e-books is determined as work A → work B → work C. In this case, when the target work is the work B, the work C corresponds to the work following the target work. The order of the e-books may be rearranged in accordance with user instructions (e.g., by title, author, magazine title, etc.).

As a first example of the display of next work (S114), the client device 10 displays a cover image of the work following the target work on the display 21 irrespective of the browsing history of the user.

As a second example of the display of next work (S114), the client device 10 refers to a browsing history of the user about the work following the target work and displays, on the display 21, a page image browsed by the user last time or any one of a predetermined number of page images before and after the page image browsed by the user last time.

After step S111, when the client device 10 receives the second pattern operation, and a direction of the operation is "backward", the client device 10 executes display of previous work (S115).

Specifically, the client device 10 displays a work previous to the target work on the display 21. For example, assume that an order of e-books is determined as work A → work B → work C. In this case, when the target work is the work B, the work A corresponds to the work previous to the target work.

As a first example of the display of previous work (S115), the client device 10 displays a cover image of the work previous to the target work on the display 21 irrespective of the browsing history of the user.

As a second example of the display of previous work (S115), the client device 10 refers to a browsing history of the user about the work previous to the target work and displays, on the display 21, a page image browsed by the user last time or any one of a predetermined number of page images before and after the page image browsed by the user last time.

After any one of steps S112 to S115, the client device 10 executes any one of steps S112 to S115 in accordance with a pattern and a direction of an operation received from the user.

The display control processing in the present embodiment can be finished by the client device 10 finishing the specified application or a Web browser.

### (3-2) Load Control Processing

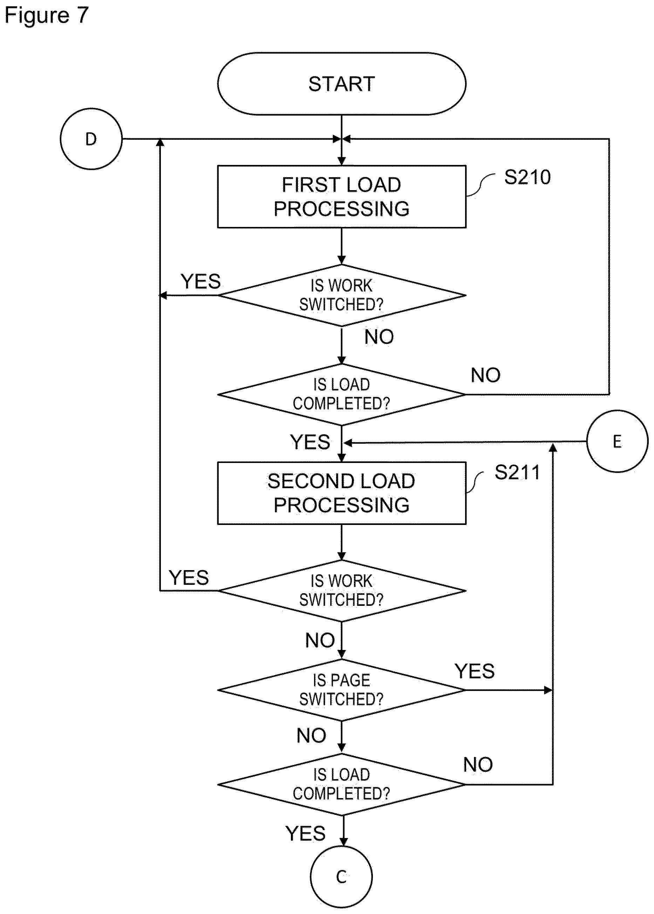

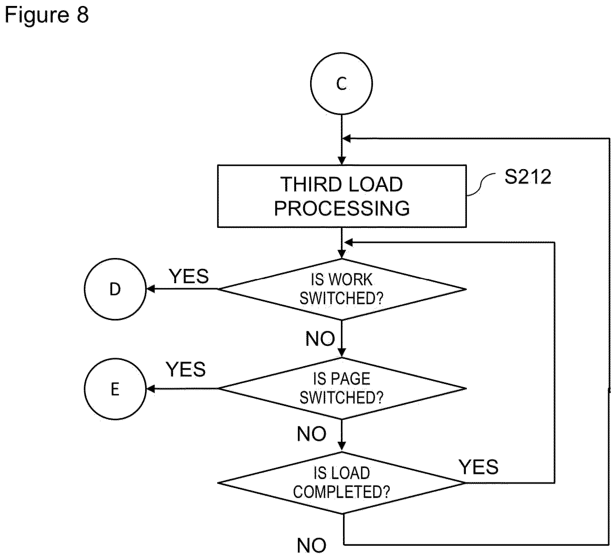

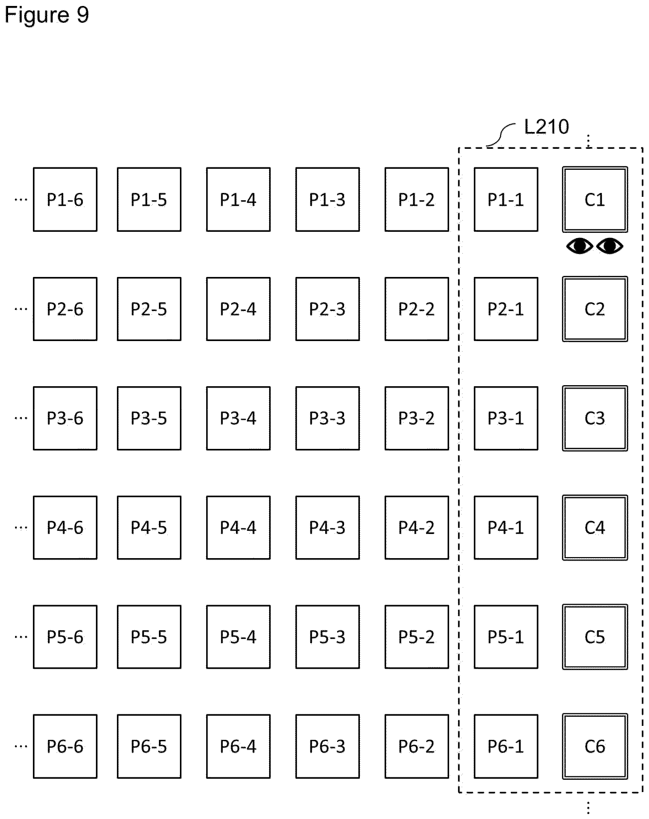

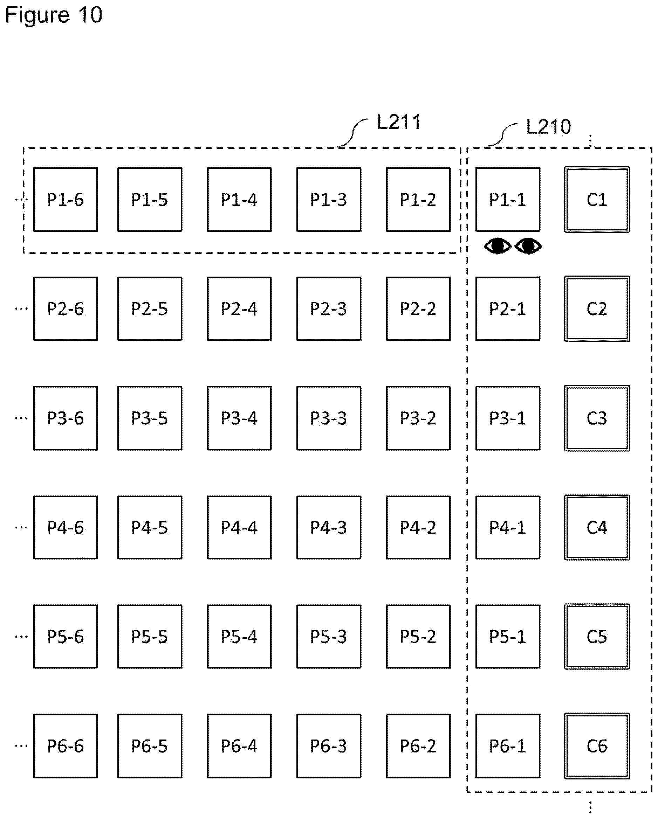

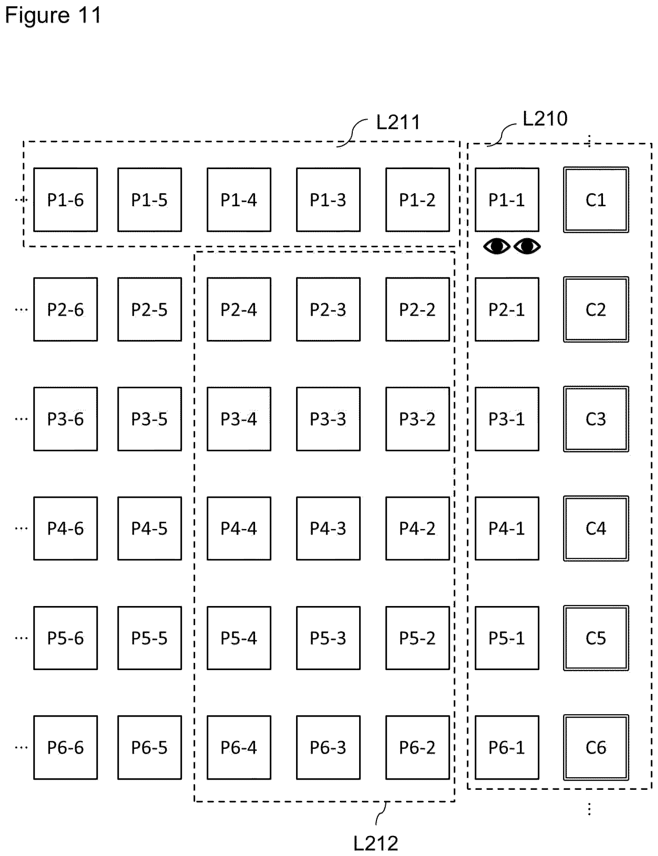

Load control processing in the present embodiment will be described. Figure 7 is a flowchart of the load control processing in the present embodiment. Figure 8 is the flowchart of the load control processing in the present embodiment. Figure 9 is an explanatory diagram of first load processing executed in the load control processing in the present embodiment. Figure 10 is an explanatory diagram of second load processing executed in the load control processing in the present embodiment. Figure 11 is an explanatory diagram of third load processing executed in the load control processing in the present embodiment.

For example, the load control processing in the present embodiment can be started after the selection of work (S110) is executed in the display control processing in the present embodiment.

As illustrated in Figure 7, the client device 10 executes the first load processing (S210).

Specifically, the client device 10 loads a cover image and a predetermined number of page images following the cover image corresponding to each of works including a target work and a predetermined number of works following the target work, onto a memory (i.e., the storage device 11).

For example, as illustrated in Figure 9, while a cover image C1 of the target work is displayed on the display 21, the client device 10 can load cover images C1 to C6 corresponding to works from the target work to the fifth work of the target work (a work corresponding to the cover image C6) and second page images P1-1 to P6-1 of the works (i.e., images included in a loading range L210), onto the memory. Thus, when a user performs an operation of the second pattern to switch from the target work to another work, a cover image and the second page image of the work after the switching can be quickly displayed on the display 21. The number of the works to be loaded (i.e., a vertical size of the loading range L210) and the number of the page images to be loaded (i.e., a horizontal size of the loading range L210) may be specified by a user of the client device 10, an administrator of the information processing system 1 (an operator of the application as an example), or the like.

Here, in Figure 9, each row displays a cover image corresponding to a work and a plurality of page images included in the work. The plurality of works are arranged in an order among the works, where a work at a top row (a work corresponding to the cover image C1) has the earliest position, and a work at a bottom row (a work corresponding to the cover image C6) has the latest position. The plurality of page images included in each work are arranged in an order among the page images, where a page image at a rightmost column (e.g., the page image P1-1) has the earliest position, and a page image at a leftmost column (e.g., the page image P1-6) has the latest position. These hold true for Figure 10 and Figure 11.

When the target work is switched by the user performing the operation of the second pattern, a range of data to be loaded in the first load processing (S210) is also switched. Therefore, when the target work is switched while the first load processing (S210) is being executed, the client device 10 executes the first load processing (S210) on the target work after the switching. Note that the client device 10 need not reload the images that have already been loaded onto the memory.

In contrast, when the first load processing (S210) is completed with the target work being not switched, the client device 10 executes the second load processing (S211).

Specifically, the client device 10 loads a predetermined number of page images following the page image being displayed on the display 21, onto the memory.

For example, as illustrated in Figure 10, while the page image P1-1 of the target work (the work corresponding to the cover image C1) is displayed on the display 21, the client device 10 loads page images subsequent to the page image P1-1 up to the fifth page image, the page image P1-6 **(i.e.,** images included in a loading range L211), onto the memory. Thus, when the user consecutively performs an operation of the first type, a page image after the switching can be quickly displayed on the display 21.

As an option of the second load processing (S211), in response to displaying a page image at a specified place in the target work **(e.g.,** the fifth page image from the first), the client device 10 may start loading, on the memory, all page images subsequent to the page image at the specified place in the target work. Thus, when the user jumps to any page image in the target work, the specified page image can be quickly displayed on the display 21.

When the target work is switched while the second load processing (S211) is being executed, the client device 10 stops the processing and executes the first load processing (S210) on the target work after the switching. Note that the client device 10 need not reload the images that have already been loaded.

When the page image displayed on the display 21 is switched by the user performing the operation of the first pattern, a range of data to be loaded in the second load processing (S211) is also switched. Therefore, when the page image is switched while the second load processing (S211) is being executed, the client device 10 executes the second load processing (S211) on a page image after the switching. Note that the client device 10 need not reload the images that have already been loaded.

In contrast, when the second load processing (S211) is completed with the target work and the page image displayed on the display 21 being not switched, the client device 10 executes the third load processing (S212) as illustrated in Figure 8.

Specifically, the client device 10 loads, onto the memory, page images including the third page image corresponding to each of a predetermined number of works following the target work (i.e., a page image following the last page image (the last in the order) loaded from each of the predetermined number of works following the target work by the first load processing) and a predetermined number of page images following the third page image.

For example, as illustrated in Figure 11, the client device 10 loads, onto the memory, P2-2 to P2-4, ..., P6-2 to P6-4, which are page images including the second page image and three page images following the second page image (i.e., images included in a loading range L212) corresponding to each of works from the target work (the work corresponding to the cover image C1) to the fifth work of the target work (a work corresponding to the cover image C6).

That is, by the execution of the first load processing (S210) to the third load processing (S212), the cover image and the page images including the first page image and a predetermined number of page images following the first page image corresponding to each of the works including the target work and a predetermined number of works following the target work are loaded onto the memory.

When the target work is switched while the third load processing (S212) is being executed, the client device 10 stops the processing and executes the first load processing (S210) on the target work after the switching. Note that the client device 10 need not reload the images that have already been loaded onto the memory.

When the page image displayed on the display 21 is switched while the third load processing (S212) is being executed, the client device 10 executes the second load processing (S211) on a page image after the switching. Note that the client device 10 need not reload the images that have already been loaded onto the memory.

In contrast, when the third load processing (S212) is completed with the target work and the page image displayed on the display 21 being not switched, the client device 10 may wait for switching of the target work or the page image or may perform further load processing (e.g., expanding the loading range of the first load processing (S210), the second load processing (S211) or the third load processing (S212)).

Finishing of the load control processing in the present embodiment can be interlocked with finishing of the display control processing in the present embodiment.

### (4) Summary

As described above, when the client device 10 in the present embodiment receives the first pattern operation while a cover image corresponding to some e-book is displayed on the display 21, the client device 10 displays a page image of the e-book on the display 21. When receiving the first pattern operation while a page image is displayed on the display 21, the client device 10 displays another page image of the same e-book on the display 21. When receiving the second pattern operation, the client device 10 displays, on the display 21, a cover image corresponding to an e-book different from the e-book being displayed. Thus, in a situation where a user searches for an e-book to read in earnest, by repeating the second pattern operation, the user can check cover images of different e-books comfortably in a short time like, for example, zapping in watching television. In addition, with the client device 10, a switch from a cover image to a page image and an operation of switching between page images are both performed by the first pattern operation. Therefore, the user can comfortably read on page images subsequent to a cover image that the user is interested in. That is, according to the present embodiment, it is possible to provide a user of an e-book with a comfortable information browsing experience.

When receiving the second pattern operation while a cover image or a page image corresponding to some e-book is displayed on the display 21, the client device 10 may display a cover image corresponding to another e-book on the display 21. Thus, in a case where a user is not inclined to read on some e-book as a result of previewing the e-book, the user can perform display switching to a cover image of another e-book in a single operation. In addition, by repeating the second pattern operation after the display switching, the user can check cover images of different e-books comfortably in a short time like, for example, zapping in watching television.

The e-books may each include a plurality of page images that are ordered. When the client device 10 receives the first pattern operation associated with the "forward" direction while some page image is displayed on the display 21, the client device 10 may display a page image immediately after the page image on the display 21. When the client device 10 receives the first pattern operation associated with the "backward" direction while some page image is displayed on the display 21, the client device 10 may display a page image immediately before the page image on the display 21. Thus, instructions for actions of going to the next page or previous page, which are opposite actions, can be issued with operations of the same type and in directions opposite to each other, which will be intuitively understandable for a user.

When the client device 10 receives the first pattern operation associated with the "forward" direction while a cover image is displayed on the display 21, the client device 10 may display the second page image of an e-book corresponding to the cover image on the display 21. Thus, an action of going to the next page and an action of opening a page following the cover are implemented with a consistent operation. Therefore, a user can comfortably read on an e-book corresponding to a cover image liked by the user.

When the client device 10 receives the first pattern operation associated with the "backward" direction while a cover image is displayed on the display 21, the client device 10 may display content corresponding to an e-book including the cover image **(e.g.,** information on introduction of the work) on the display 21. Thus, with the cover image being displayed on the display 21, the user can select whether to check a page image or the content corresponding to the e-book **(e.g.,** the information on introduction of the work).

At least one of a swipe operation and a flick operation in the up-down direction may be assigned as one of the first pattern operation and the second pattern operation, and at least one of a swipe operation and a flick operation in the right-left direction may be assigned as the other of the first pattern operation and the second pattern operation. Thus, a direction of the first pattern operation and a direction of the second pattern operation differ from each other. Therefore, it is possible to prevent an operation performed by a user from being recognized as an operation of an unintended pattern.

A plurality of e-books that can be browsed with the client device 10 may be ordered. In addition, while a page image (a cover image can be included) of some e-book is displayed on the display 21, the client device 10 may load a cover image and a predetermined number of page images following the cover image that correspond to a predetermined number of e-books following the e-book, onto the memory (the storage device 11). Thus, when the user repeats the second pattern operation, a cover image of an e-book after the switching can be quickly displayed on the display 21.

While a page image of some e-book is displayed on the display 21, the client device 10 may load a predetermined number of page images following the page image onto the memory. Thus, when the user repeats the first pattern operation, a page image after the switching can be quickly displayed on the display 21.

In response to displaying a page image at a specified place on the display 21, the client device 10 may load all page images subsequent to the page image onto the memory. Thus, in a case where a user can be assumed to be reading on an e-book in earnest, any page image in the e-book can be quickly displayed on the display 21.

Upon receiving the second pattern operation, the client device 10 may stop loading the page images. Thus, computer resources can be allocated to, for example, loading cover images that have to be displayed (i.e., the first load processing mentioned above) when the second pattern operation is repeated.

### (5) Other Modifications

The storage device 11 may be connected to the client device 10 via a network NW. The display 21 may be built in the client device 10. The storage device 31 may be connected to the server 30 via the network NW.

The steps in the information processing described above can be executed by any one of the client device 10 and the server 30. For example, the server 30 may perform display control based on user instructions obtained from the client device 10, and the client device 10 may mainly receive the user instructions and display information.

In the above description, an example in which an e-book is displayed on a cover-image or page-image basis is shown. However, any part constituting an e-book can be used as a unit for display. For example, an e-book may be displayed on a frame basis or face-page image basis or may be displayed in units of a specified number of lines in a main text. On what basis an e-book is displayed may be selectable by a user of the client device 10.

In the above description, an example in which the flick operation in the right-left direction is determined as the first pattern operation, and the flick operation in the up-down direction is determined as the second pattern operation is stated. However, which operation is assigned to the first pattern operation or the second pattern operation and which of the operations in the patterns is assigned as the operation in the "forward" direction or the operation in the "backward" direction are optional. For example, the assignments may be selected by a user of the client device 10. For example, any one of the following variations is adopted.
- The flick operation in the up-down direction is assigned as the first pattern operation, and the flick operation in the right-left direction is assigned as the second pattern operation.
- The swipe operation in the right-left direction is assigned as the first pattern operation, and the swipe operation in the up-down direction is assigned as the second pattern operation.
- The swipe operation in the up-down direction is assigned as the first pattern operation, and the swipe operation in the right-left direction is assigned as the second pattern operation.
- The screen is divided into upper, lower, right, and left regions, a touch operation in the right and left regions is assigned as the first pattern operation, and a touch operation in the upper and lower regions is assigned as the second pattern operation.
- The screen is divided into upper, lower, right, and left regions, a touch operation in the upper and lower regions is assigned as the first pattern operation, and a touch operation in the right and left regions is assigned as the second pattern operation.

In a case where the flick operation or the swipe operation in the up-down direction, or the touch operation in the upper and lower regions is assigned as the first pattern operation, an exception handling described below may be adopted. Specifically, in switching between page images constituting right-left facing pages (i.e., a left page and a right page) in a comic, display of the screen may be controlled such that the page images move, in response to the first pattern operation, in the right-left direction rather than the up-down direction. Thus, by performing, for example, an operation in an upward direction while the right side of the right-left facing pages is displayed, the display is switched such that the page image flows rightward, and by performing, for example, an operation in a downward direction while the left side of the right-left facing pages is displayed, the display is switched such that the page image flows leftward. In contrast, in switching between other normal page images, the display is switched in response to the first pattern operation such that the page images flow upward (when going to the next page) or downward (when going to the previous page). Switching the display control in this manner enables a user to go to the next or previous page image with the same operation and makes it easy for the user to recognize that the page images being browsed constitute the right-left facing pages, allowing the user to feel the appeal of right-left facing pages as with a paper comic. Alternatively, in switching between page images constituting right-left facing pages (i.e., a left page and a right page) in a comic, the flick operation or the swipe operation in the right-left direction or the touch operation in the right and left regions may be assigned as the first pattern operation. Thus, the display is switched leftward by performing an operation in the left direction while the right side of the right-left facing pages is displayed, and the display is switched rightward by performing an operation in the right direction while the left side of the right-left facing pages is displayed. Therefore, it is easy for a user to recognize that the page images being browsed constitute the right-left facing pages, allowing the user to feel the appeal of right-left facing pages as with a paper comic.

The variations described above may be combined unless a conflict arises. For example, a flick operation and a swipe operation in a specified direction may be assigned as the first pattern operation, and a flick operation and a swipe operation in a direction perpendicular to the specified direction may be assigned as the second pattern operation. When the client device 10 receives the first pattern or second pattern operation, the client device 10 may perform different types of display control in accordance with a type of the operation.

As an example, when the client device 10 receives a flick operation or a touch operation, the client device 10 may immediately display an image after the switching on the display 21. That is, the client device 10 may finish displaying an image before the switching and display the entire image after the switching on the display 21. Thus, the display 21 displays only one image at a time, and thus a user can check the entire image after the switching promptly after the operation. In contrast, when the client device 10 receives a swipe operation, the client device 10 may display, on the display 21, a part of the image before the switching (i.e., an image displayed before the operation is received) and a part of the image after the switching until an operation amount reaches a threshold. When the operation amount reaches the threshold, the client device 10 may finish displaying the image before the switching and display the entire display content after the switching on the display 21. Thus, before the display is completely switched, the images before and after the switching are temporarily displayed side by side. Therefore, in a case where, for example, a user passes a cover image or a page image that a user is interested in while repeating an operation of the same pattern, the user can quickly return to the cover image or the page image before the switching. Alternatively, when receiving the swipe operation, the client device 10 may display, on the display 21, the images before and after the switching until the operation amount reaches the threshold in such a manner as to decrease a display area of the image before the switching and increase a display area of the image after the switching with an increase in the operation amount.

upon receiving a third pattern operation (e.g., a tap operation), the client device 10 may display an object for receiving user instructions together with a page image on the screen or may remove the object being displayed from the screen. The object can be displayed in, for example, any region in the screen. As an example, a footer is displayed at a bottom end of the screen, and a sidebar is displayed at a right end of the screen.

In the footer, for example, at least one of the following objects may be placed.
- Object for receiving user instructions to move to a home screen.
- Object for receiving user instructions to move to a ranking page relating to e-books.
- Object for receiving user instructions to move to a user's personalized page.

In the sidebar, for example, at least one of the following objects may be placed.
- Object for receiving user instructions to submit a reaction (e.g., "Good") on an e-book being browsed by a user.
- Object for receiving user instructions to browse a reaction submitted on an e-book being browsed by a user.
- Object for receiving user instructions to share an e-book being browsed by a user with other users.
- Object for receiving user instructions to submit a comment on an e-book being browsed by a user.
- Object for receiving user instructions to browse a comment submitted on an e-book being browsed by a user.

Furthermore, when an e-book is switched by the second pattern operation, the client device 10 may display, on the screen, the same object as that displayed when the third pattern operation is received, together with a cover image. In contrast, when the client device 10 displays a cover image on the screen in response to switching a page image by the first pattern operation, the client device 10 need not display, on the screen, the same object as that displayed when the third pattern operation is received.

In addition, when the client device 10 receives the first pattern operation while an object is displayed together with a page image (including a cover image) on the screen, the client device 10 may display a page image immediately before or after the page image and remove the object from the screen.

In the above description, an example in which switching between page images is performed in accordance with the first pattern operation, and switching between works (e-books) is performed in accordance with the second pattern operation is shown. However, one or more advertisements may be inserted between page images (can be between page images in the middle of a work) or between works. In this case, the client device 10 may perform switching between a page image and an advertisement or switching between advertisements in accordance with the first pattern operation. Likewise, the client device 10 may perform switching between a work and an advertisement or switching between advertisements in accordance with the second pattern operation.

The advertisements each may be a still image or a video, which can be combined with sound. The advertisements each may introduce a commercial product or a service or convey a message relating to an advertiser, or may issue an announcement of the application for browsing an e-book to users. In addition, an object (e.g., a button or a link text) for receiving user instructions for accessing a predetermined link destination may be embedded in each advertisement. The link destination may be within the application for browsing an e-book or outside the application.

In a case where the advertisement includes a plurality of still images (hereinafter, will be referred to as "advertisement images") ordered, the client device 10 may perform switching between the advertisement images in accordance with the first pattern operation.

When the client device 10 displays an advertisement on the screen in accordance with the second pattern operation, the client device 10 may further display the sidebar or the footer mentioned above or a combination thereof. In this case, the "e-book being browsed by a user" can be interpreted as an e-book browsed by the user before start of displaying the advertisement or an e-book to be browsed by the user after the start of displaying the advertisement.

The client device 10 may display on the screen, information indicating that the display content on the screen is an advertisement (e.g., a text such as "sponsored") together with the advertisement.

The entire screen of the display 21 may be allocated as a region for displaying a cover image of an e-book or a part (e.g., a page image) included in the e-book (hereinafter, will be referred to as a "work browsing region"), or only a part of the screen of the display 21 may be allocated as the work browsing region. Alternatively, a browsing mode in which the entire screen is allocated as the work browsing region and a browsing mode in which only a part of the screen is allocated as the work browsing region may be switchable to each other in accordance with instructions from a user of the client device 10 or an administrator of the information processing system 1. In a case where only a part of the screen is allocated as the work browsing region, the client device 10 may display additional information in a region included in a remaining part that is the screen excluding the work browsing region (hereinafter, will be referred to as a "band region"). Thus, information can be provided to a user who is browsing an e-book. The additional information displayed in the band region can include, for example, at least one of the following. - Object for receiving user instructions for jumping to the vicinity of a position that was last displayed when a user of the client device 10 browsed a target work the last time (e.g., any one of a page image displayed last time or a predetermined number of page images before and after the page image).
- Comment submitted on a target work by a user (e.g., a user who browses the target work in the past)
- Advertisement (as mentioned above)
- Tag applied to a target work (e.g., information for categorizing the target work, such as a genre, author's name, magazine title, or awards).

By displaying a comment, a user can browse impressions, opinions, questions, and the like from other users who have read the same e-book and can send the user's impressions, opinions, questions, and the like to the other users. By displaying an advertisement, for example, a part or all of costs of providing e-books or client devices 10 to users can be paid with advertising revenue, and information on a commercial product or a service that users may want can be provided. An advertisement displayed in the band region may be determined in accordance with an attribute of a target work or an attribute of a user. The client device 10 may obtain information to be displayed in the band region from the server 30 when, for example, a target work is switched.

Alternatively, the additional information may be displayed superimposed on a cover image of an e-book or a part (e.g., a page image) included in the e-book.

In the above description, browsing an e-book is described as an example. However, the present embodiment can be used for browsing various types of information. As an example, the present embodiment can be applied to browsing commercial product information. That is, when the client device 10 receives the first pattern operation while first content corresponding to a first commercial product (e.g., an image, a video, or a description of the commercial product, or a combination thereof) is displayed on the screen, the client device 10 may display another part included in the first content or second content corresponding to the first commercial product on the screen. In addition, when the client device 10 receives the second pattern operation, which is different from the first pattern operation, the client device 10 may display content corresponding to a second commercial product, which is different from the first commercial product, on the screen. Thus, in a situation where a user searches a commercial product that the user is considering purchasing, by repeating the second pattern operation, the user can check content of different commercial products comfortably in a short time like, for example, zapping in watching television.

An embodiment of the present invention is described above in detail. Note that the scope of the present invention is not limited to the above embodiment. In addition, the above embodiment may be subjected to various improvements or modifications without departing from the gist of the present invention. Furthermore, the above embodiment and modifications may be combined.

### [REFERENCE SIGNS LIST]

- 1:: information processing system
- 10:: client device
- 11:: storage device
- 12:: processor
- 13:: input-output interface
- 14:: communication interface
- 21:: display
- 30:: server
- 31:: storage device
- 32:: processor
- 33:: input-output interface
- 34:: communication interface

## Claims

1. A program for causing a computer to function as:
means for, when receiving a first pattern operation while a first cover image corresponding to a first e-book is displayed on a screen, displaying a part included in the first e-book on the screen;
means for, when receiving the first pattern operation while the part included in the first e-book is displayed on the screen, displaying another part included in the first e-book on the screen; and
means for, when receiving a second pattern operation different from the first pattern operation, displaying a second cover image corresponding to a second e-book on the screen, the second e-book being different from the first e-book.

2. The program according to claim 1, wherein when receiving the second pattern operation while the first cover image or the part included in the first e-book is displayed on the screen, the means for displaying the second cover image on the screen displays the second cover image on the screen.

3. The program according to claim 1 or claim 2, wherein when receiving the second pattern operation, the means for displaying the second cover image on the screen displays, on the screen, a part of an image displayed before the second pattern operation is received, and displays a part of the second cover image on the screen until an operation amount reaches a threshold, and when the operation amount reaches the threshold, the means for displaying the second cover image on the screen finishes displaying the image displayed before the second pattern operation is received, and displays the entire second cover image on the screen.

4. The program according to claim 1 or claim 2, wherein when receiving the second pattern operation, the means for displaying the second cover image on the screen finishes displaying one of a cover image of the first e-book and the part included in the first e-book and displays the entire second cover image on the screen.

5. The program according to any one of claim 1 to claim 4, wherein when receiving the second pattern operation, the means for displaying the second cover image on the screen displays, together with the second cover image, an object for receiving a user instruction on the screen.

6. The program according to any one of claim 1 to claim 5, causing the computer to function as means for, upon receiving a third pattern operation different from the first pattern operation and the second pattern operation, displaying an object for receiving a user instruction on the screen or removing the object being displayed from the screen.

7. The program according to claim 5 or claim 6, causing the computer to function as means for, when receiving the first pattern operation while the object for receiving the user instruction is displayed on the screen, removing the object from the screen.

8. The program according to any one of claim 1 to claim 7, wherein
the first e-book includes a plurality of page images that are ordered,
the first cover image corresponds to a first page image of the plurality of page images, and
the means for displaying another part included in the first e-book on the screen:
when receiving an operation associated with the first pattern operation in a first direction while a first page image is displayed on the screen, displays a second page image of the plurality of page images on the screen, the first page image being one of the plurality of page images, the second page image being immediately after the first page image; and
when receiving an operation associated with the first pattern operation in a second direction while the first page image is displayed on the screen, displays a third page image of the plurality of page images on the screen, the second direction being opposite to the first direction, the third page image being immediately before the first page image.

9. The program according to claim 8, causing the computer to function as means for, when receiving an operation associated with the first pattern operation in the second direction while the first cover image is displayed on the screen, displaying content corresponding to the first e-book on the screen.

10. The program according to any one of claim 1 to claim 9, wherein
at least one of a swipe operation and a flick operation in an up-down direction is assigned as one of the first pattern operation and the second pattern operation, and
at least one of a swipe operation and a flick operation in a right-left direction is assigned as another of the first pattern operation and the second pattern operation.

11. The program according to any one of claim 1 to claim 10, wherein
a plurality of e-books including the first e-book and the second e-book are ordered,
each of the plurality of e-books includes a plurality of page images that are ordered,
a cover image corresponding to each of the plurality of e-books corresponds to a first page image of the plurality of page images of each of the plurality of e-books, and
the program causes the computer to function as means for, while a target page image is displayed on the screen, performing first load processing of loading a cover image and a second predetermined number of page images following the cover image onto a memory, the target page image being any one of page images of a target book, the target book being any one of the plurality of e-books, the cover image and the second predetermined number of page images corresponding to each of a first predetermined number of e-books following the target book.

12. The program according to claim 11, causing the computer to function as means for, in response to the screen displaying a page image at a specified place in a plurality of page images of the target book after the first load processing is completed, starting loading of all page images subsequent to the specified place in the target book onto the memory.

13. The program according to claim 11 or claim 12, causing the computer to function as:
means for, while the target page image is displayed on the screen after the first load processing is completed, performing second load processing of loading a third predetermined number of page images following the target page image onto the memory; and
means for, upon receiving the second pattern operation while the second load processing is being executed, stopping the second load processing.

14. The program according to any one of claim 11 to claim 13, causing the computer to function as:
means for, while the target page image is displayed on the screen after the first load processing is completed, performing second load processing of loading a third predetermined number of page images following the target page image onto the memory; and
means for, while the target page image is displayed on the screen after the second load processing is completed, performing third load processing of loading a fourth predetermined number of page images from a page image following a last page image loaded by the first load processing onto the memory, the fourth predetermined number of page images and the last page image being page images of each of the first predetermined number of e-books following the target book.

15. The program according to any one of claim 1 to claim 14, causing the computer to function as means for displaying additional information on the screen.

16. The program according to claim 15, wherein the additional information includes an object for receiving a user instruction for jumping to a vicinity of a position that was last displayed when a user browsed the first e-book last time.

17. The program according to claim 15 or claim 16, wherein the additional information includes at least one of an advertisement, a tag applied to the first e-book, and a comment submitted on the first e-book by a user.

18. The program according to any one of claim 1 to claim 17, wherein
at least one of a swipe operation and a flick operation in an up-down direction is assigned as the first pattern operation,
the first e-book includes a plurality of page images that are ordered, and
in switching between page images constituting right-left facing pages, the means for displaying another part included in the first e-book on the screen controls display of the screen such that the page images move in a right-left direction in response to the first pattern operation, and in switching page images including a page image not constituting right-left facing pages, the means for displaying another part included in the first e-book on the screen controls display of the screen such that the page images move in an up-down direction in response to the first pattern operation.

19. The program according to any one of claim 1 to claim 18, wherein
a plurality of e-books including the first e-book and the second e-book are ordered,
the second e-book is immediately after the first e-book, and
the program causes, when an advertisement is inserted between the first e-book and the second e-book, the computer to function as:
means for, when receiving the second pattern operation while the part included in the first e-book is displayed on the screen, displaying the advertisement on the screen; and
means for, when receiving the second pattern operation while the advertisement is displayed on the screen, displaying the second cover image on the screen.

20. The program according to any one of claim 1 to claim 18, wherein
the first e-book includes a plurality of page images that are ordered,
the plurality of page images includes a first page image and a second page image that is immediately after the first page image, and
the program causes, when an advertisement is inserted between the first page image and the second page image, the computer to function as:
means for, when receiving the first pattern operation while the first page image is displayed on the screen, displaying the advertisement on the screen; and
means for, when receiving the first pattern operation while the advertisement is displayed on the screen, displaying the second page image on the screen.

21. A method wherein a computer executes:
a step of, when receiving a first pattern operation while a first cover image corresponding to a first e-book is displayed on a screen, displaying a part included in the first e-book on the screen;
a step of, when receiving the first pattern operation while the part included in the first e-book is displayed on the screen, displaying another part included in the first e-book on the screen; and
a step of, when receiving a second pattern operation different from the first pattern operation, displaying a second cover image corresponding to a second e-book on the screen, the second e-book being different from the first e-book.

22. An information processing device comprising:
means for, when receiving a first pattern operation while a first cover image corresponding to a first e-book is displayed on a screen, displaying a part included in the first e-book on the screen;
means for, when receiving the first pattern operation while the part included in the first e-book is displayed on the screen, displaying another part included in the first e-book on the screen; and
means for, when receiving a second pattern operation different from the first pattern operation, displaying a second cover image corresponding to a second e-book on the screen, the second e-book being different from the first e-book.

23. A system comprising a first computer and a second computer, wherein
the first computer includes:
means for, when the second computer receives a first pattern operation while a first cover image corresponding to a first e-book is displayed on a screen of the second computer, displaying a part included in the first e-book on the screen;
means for, when the second computer receives the first pattern operation while the part included in the first e-book is displayed on the screen of the second computer, displaying another part included in the first e-book on the screen; and
means for, when the second computer receives a second pattern operation different from the first pattern operation, displaying a second cover image corresponding to a second e-book on the screen of the second computer, the second e-book being different from the first e-book.
